# EUROPEAN PATENT APPLICATION

(11) **EP 1 104 866 A1**
(43) Date of publication of application: **06.06.2001**
(21) Application number: 99830747.4
(22) Date of filing: 01.12.1999
(51) Int. Cl.: F16L 25/00

(54) **Connector for corrugated conduits**

(71) Applicant: Legrand S.p.A., 20080 Zibido San Giacomo (Milano) (IT)
(72) Inventor: Bogogna, Giancarlo, 28010 Vaprio d'Agogna (Novara) (IT); Cagnoni, Paolo, 20090 Pieve Emanuele (Milano) (IT)
(74) Representative: Siniscalco, Fabio

(57) **Abstract**

The present invention relates to a connector for corrugated conduits, comprising a body (1) which can house a corrugated conduit by being fitted thereon and which has engagement means (7) which can be fitted in channels of the corrugated conduit and which can be operated in order to restrain the corrugated conduit in the body (1), characterized in that it comprises a ring nut (2) which is movable on the body (1) and which, in a first operative condition, leaves the engagement means (7) free to be disengaged from the channels of the corrugated conduit and, in a second operative condition, keeps the engagement means (7) fitted in the channels.

## Description

The present invention relates to a connector for corrugated conduits for electrical cables and, in particular, to a connector for corrugated conduits comprising a body which can house a corrugated conduit by being fitted thereon, the body comprising means for clamping the corrugated conduit and means for operating the clamping means.

Connectors for corrugated conduits for electrical cables are widely known in the field and generally comprise a hollow main body for housing a portion of a corrugated conduit. At the opposite end to that through which the corrugated conduit is inserted, the body has a threaded portion so that it can be screwed onto any corresponding threaded portion which is present, for example, on the body of a piece of apparatus.

The corrugated conduit can then be secured inside the body by various clamping means.

These means may be constituted by two flange-like lateral portions of the body which are symmetrical with respect to a plane extending through the axis of the body. The flanges are connected to the body by articulated connection means which allow them to bend towards the body so as to cover respective openings formed in its wall.

The flanges also have teeth for forming a restrained closure on the body and further comprise tongues for engaging the channels of the corrugated conduit.

Alternatively, the clamping means may be constituted by a fork-shaped element which can be inserted in an opening in the side wall of the body, transversely relative to the axis of the body, the fork-shaped element having, at its two ends, two teeth which can snap engage in corresponding slots suitably formed in the side wall of the body. The fork-shaped element also has projections for engaging in the channels of the corrugated conduit.

However, the above-mentioned solutions have some disadvantages.

First of all, the clamping means described above are quite complex structurally and this causes some difficulty during their use. In particular, the operation to release the clamping means is somewhat complex since it is necessary to use a tool to forcibly disengage the means from the body.

Moreover, connectors for corrugated conduits are often not easily accessible to technicians who have to set up fitting or dismantling operations.

There is consequently a great need to provide a connector for corrugated conduits which is practical, functional and secure.

The problem upon which the present invention is based is therefore that of devising a connector for corrugated conduits which has structural and functional characteristics such as to satisfy the above-mentioned requirements and at the same time to prevent the problems of connectors for corrugated conduits of the prior art.

This problem is solved by a connector for corrugated conduits for electrical cables having the characteristics recited in the appended claims.

Further characteristics and advantages of the connector for corrugated conduits according to the present invention will become clear from the following description of a preferred embodiment thereof, given by way of non-limiting example with reference to the appended drawings, in which:
Figure 1 is a side view of the body of the connector for corrugated conduits according to the invention,
Figure 2 shows the connector body of Figure 1 from below,
Figure 3 is a section through the connector body, taken on the line III-III of Figure 1,
Figure 4 is a section through the connector body, taken on the line IV-IV of Figure 1,
Figure 5 is a section through the connector body, taken on the line V-V of Figure 2,
Figure 6 is a side view of a ring nut according to the invention,
Figure 7 shows the ring nut of Figure 6 from below,
Figure 8 is a section through the ring nut, taken on the line VIII-VIII of Figure 6,
Figure 9 is a section through the ring nut, taken on the line IX-IX of Figure 7,
Figure 10 is a section through the ring nut, taken on the line X-X of Figure 7,
Figure 11 is a side view of a ring nut and a body according to the invention, not assembled,
Figure 12 shows the ring nut and the body of Figure 11 assembled,
Figure 13 is a view showing the ring nut and the body of Figure 11 from below,
Figure 14 is a section through the ring nut and the body, taken on the line XIV-XIV of Figure 12,
Figure 15 is a side view of a ring nut and of a body according to the invention, in a first operative condition,
Figure 16 is a section through the ring nut and the body of Figure 15, taken on the line XIV-XIV of Figure 12,
Figure 17 is a section through the ring nut and the body of Figure 15, taken on the line V-V of Figure 2,
Figure 18 is a partial section through the body and the ring nut of Figure 15 with a corrugated conduit inserted, taken on the line V-V of Figure 2,
Figure 19 is a side view of the connector with a corrugated conduit inserted, in a second operative condition,
Figure 20 is a section through the connector with the corrugated conduit of Figure 19, taken on the line III-III of Figure 1,
Figure 21 is a section through the connector with the corrugated conduit of Figure 20, taken on the line V-V of Figure 2,
Figure 22 is a side view of the connector in a third operative condition thereof,
Figure 23 is a section similar to that of Figure 20, through the connector of Figure 22,
Figure 24 shows a connector with a corrugated conduit not inserted,
Figure 25 shows a connector with a corrugated conduit inserted, in a fourth operative condition,
Figure 26 shows a connector with a corrugated conduit inserted, in a fifth operative condition,
Figure 27 shows a connector with a corrugated conduit inserted, in a sixth operative condition,
Figure 28 shows a gasket for a connector according to the invention, from above,
Figure 29 is a section through a gasket, taken on the line XXIX-XXIX of Figure 28,
Figure 30 is a section through the gasket of Figure 29 and a cross-section of a corrugated conduit,
Figure 31 is a partial cross-section of the joint according to the invention with a gasket and a corrugated conduit inserted,
Figure 32 is a cross-section of the joint according to the invention, with a variant of the gasket,
Figure 33 is a cross-section of the joint of Figure 32 with a corrugated conduit inserted.

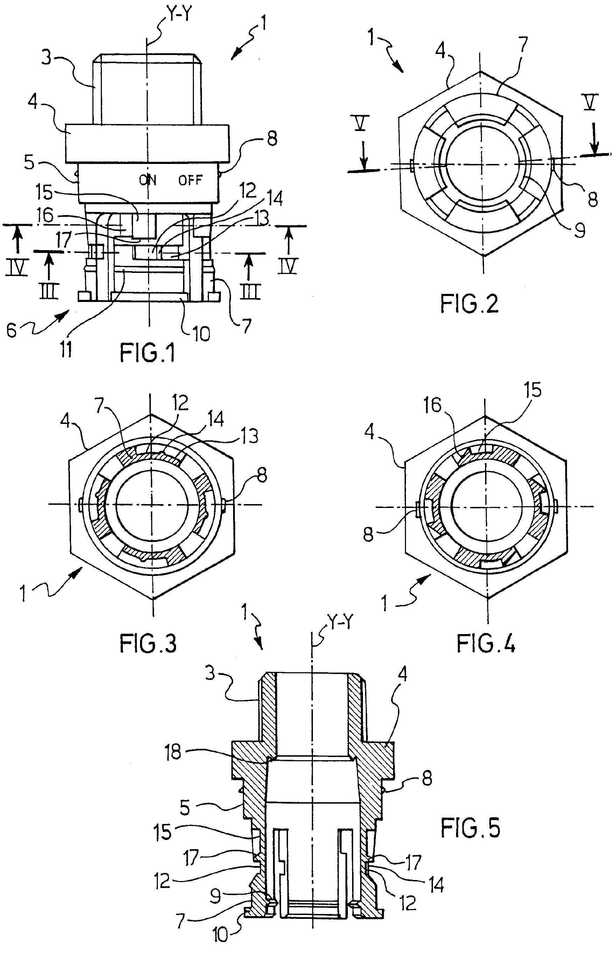

In Figure 1, a connector body according to the present invention is generally indicated 1.

The body 1 has a cylindrical internal cross-section and comprises a first end 3, a first intermediate portion 4, a second intermediate portion 5, and a second end 6 comprising flexible axial extensions 7.

The end 3 may preferably be threaded to allow the body 1 to be screwed onto a corresponding thread which is present, for example, on the body of any apparatus.

The first portion 4 is preferably hexagonal so as to facilitate the fixing of the body 1 to apparatus with the aid of tools.

The second intermediate portion 5 is, for example, generally cylindrical, and bears external stop means 8 for restraining a ring nut in abutment. The stop means 8 are preferably constituted by at least two teeth for mating with corresponding recesses present in a ring nut which can be coupled with the connector body 1.

The second portion 5 also has external visual location marks, for example, wording such as "ON-OFF", the function of which will be explained below.

The flexible axial extensions 7 of the second end 6 extend substantially parallel to and away from the second portion 5. The flexible axial extensions 7 are arranged symmetrically with respect to the axis of the connector and in a manner such that their internal walls are continuous with the internal walls of the second portion 5.

Although, in the embodiment shown, there are four flexible axial extensions 7, this does not constitute a limitation since it is clearly possible to provide a different number of extensions, for example, two extensions.

The head ends of the flexible axial extensions 7 are provided internally with teeth 9 to be fitted in the channels of a corrugated conduit, and externally with a projecting lip 10.

Proceeding from the lip 10 towards the second portion 5, the external wall of each flexible axial extension 7 has a rib 11 arranged transversely relative to the axis of the connector.

After the rib 11, again externally, there are a first recess 12 and a second recess 13 which are disposed along the same line substantially transverse the axis of the connector. Moreover, the first and second recesses 12 and 13 are separated by a projection or catch 14.

The second recess 13 is also open towards one of the slots present between one flexible axial extension 7 and another, as shown in Figure 3.

Each flexible axial extension 7 then has a third recess 15 positioned between the first recess 12 and the second intermediate portion 5 of the body 1 so as to be substantially aligned with the first recess 12.

The third recess 15 is also separated from the first recess 12 by means of a first inclined plane 17 facing towards the third recess 15.

The third recess 15 is also delimited by a second inclined plane 16 arranged so as to form an edge of reduced thickness facing towards the slot on the opposite side of the flexible extension 7 to the slot which is continuous with the second recess 13, as shown in Figure 4.

With reference to Figure 5, a cusp 18 facing towards the second end 6 is preferably formed on the internal wall of the connector body 1 in the vicinity of the connection point between the end 3 and the first intermediate portion 4.

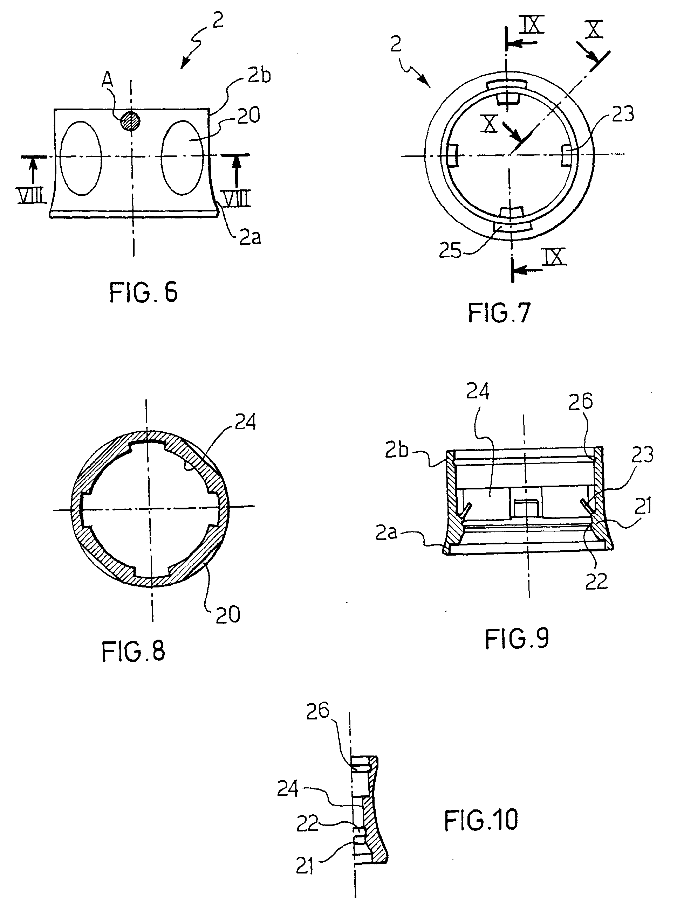

With reference to Figures 6 and 7, a ring nut, generally indicated 2, can be fitted on the connector body 1 so as to be movable axially and rotatable.

The ring nut 2 is an annular band which preferably has a slightly tapered end 2a for facilitating radial outward bending of the flexible axial extensions 7 when the ring nut 2 is fitted on the body 1 so that it abuts the first intermediate portion 4, and an end 2b remote from the end 2a and representing the end by which the ring nut 2 is fitted onto the body 1.

The ring nut 2 preferably has recesses 20 on its outer surface for facilitating gripping with the fingers of one hand during use.

A pointer A is formed at the end 2b for indicating the visual location marks "ON-OFF" on the second intermediate portion 5 of the body 1. The pointer is preferably constituted by a coloured mark.

Internally, the ring nut 2 has a ring 21 positioned at the tapered end 2a, as shown in Figure 9. The ring 21 has a groove 22 for housing the corresponding rib 11 formed on the flexible axial extensions 7.

Proceeding away from the tapered end 2a, the ring 21 bears four flexible tabs 23 which are inclined towards the end 2b, as shown in Figure 9.

Four shoulders 24 extend substantially as far as half way along the length of the ring nut 2 at the bases of the tabs 23 but angularly offset therefrom.

The tabs 23 and the shoulders 24 are arranged facing one another in pairs, as shown in Figure 7 and Figure 8, respectively.

Moreover, with particular reference to Figure 7, two seats 25 are formed in the end wall of the ring nut 2 for the removal of the ring nut 2 from the body 1 with the aid of a tool.

In the vicinity of the end 2b and around the entire internal circumference of the ring nut 2, there is a groove 26 for engagement with the corresponding teeth 8 on the second intermediate portion 5 of the body 1.

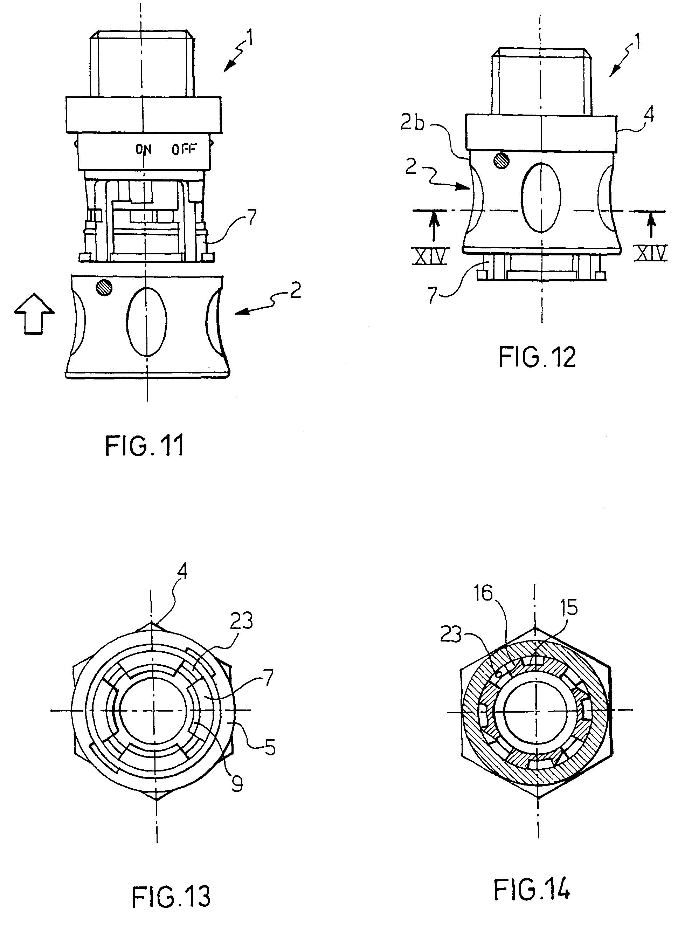

The operation of the connector for corrugated conduits according to the present invention will now be described below with reference to Figures 11 to 31.

Figure 11 shows a body 1 and a ring nut 2 in position for engagement on the body 1. The arrow indicates the direction in which the ring nut 2 is engaged on the body 1 so as to form the connector for corrugated conduits of the invention.

Figure 12 shows the ring nut 2 fully fitted on the body 1 so that its fitting end 2b abuts the first intermediate portion 4 of the body. The ring nut 2 is restrained in this position by virtue of the engagement achieved between the teeth 8 of the second intermediate portion 5 of the body 1 and the groove 26 of the ring nut 2.

Moreover, in this position, the head ends of the flexible axial extensions 7 project from the ring nut 2.

In the view from above shown in Figure 13, it can be seen that the tabs 23 are disposed in the slots between the four flexible axial extensions 7. Moreover, as shown in Figure 14, the tabs 23 are disposed adjacent the second inclined plane 16, in a clockwise direction. The third recess 15 is disposed adjacent the second inclined plane 16 in a clockwise direction.

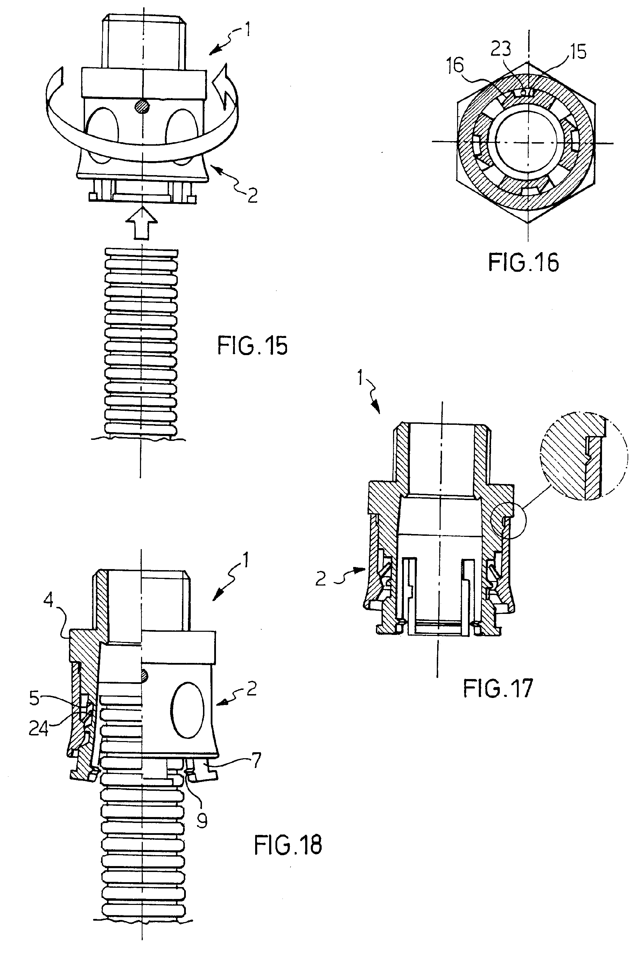

If the ring nut 2 is rotated clockwise as shown in Figure 15, the tabs 23 pass over the second inclined plane 16 and are brought into the third recess 15.

This position, which is shown clearly in Figure 16, represents a preferred state in which the connector for corrugated conduits according to the invention can be sold and, in any case, represents the condition in which the connector is arranged before the insertion of a corrugated conduit.

When the ring nut 2 is in abutment with the first hexagonal portion 4 of the body 1, the shoulder 24 also abuts the second portion 5 and the head portions of the flexible axial extensions 7 carrying the teeth 9 are free to bend outwardly, consequently permitting the insertion of a corrugated conduit, as shown in Figure 18.

Once a corrugated conduit has been inserted in the connector, the ring nut 2 can be pulled axially so that the tabs 23 pass over the inclined plane 17 and are brought into the first recess 12, achieving a snap-engagement. Moreover, the rib 11 of the head ends of the flexible axial extensions 7 will come into engagement with the corresponding groove 22 of the ring nut 2 and the lip 10 of each resilient extension 7 will come into abutment with the ring 21 to prevent the ring nut 2 from slipping off the body 1.

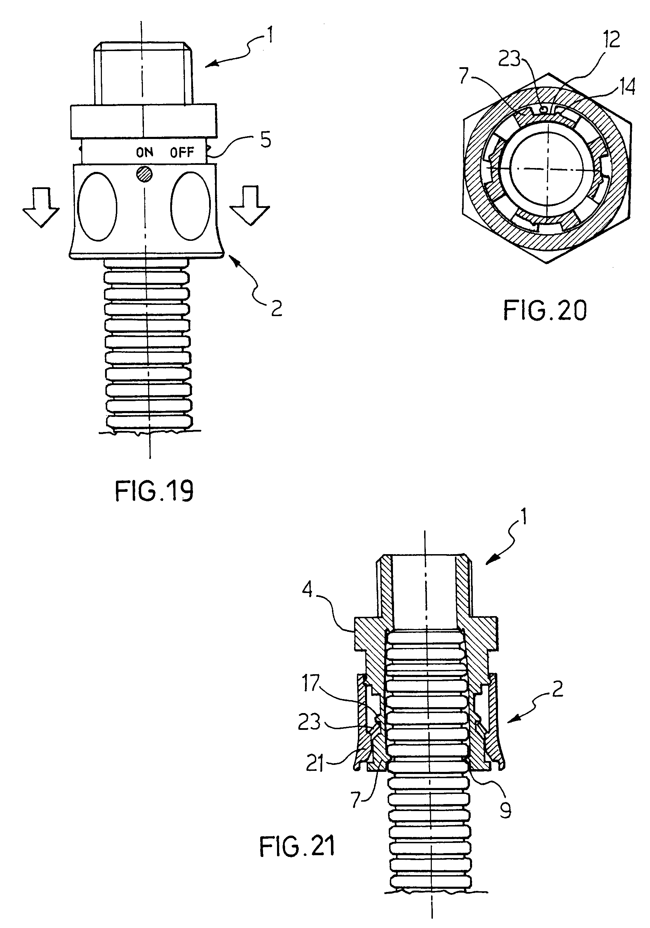

This movement, which is shown in Figure 19, simultaneously performs two functions: the locking of the corrugated conduit in the connector, and the engagement of a security system.

With regard to the locking of the corrugated conduit, it is clear, as is also shown in Figure 21, that the ring 21 is now in contact with the head portions of the flexible axial extensions 7, preventing any movement thereof in a radial direction. As a result, the teeth 9 are forced to remain in the position of engagement in the channels of the corrugated conduit, even after any attempt to remove the corrugated conduit from the connector.

Moreover, the tabs 23 have passed over the first inclined plane 17 and have been brought into the first recess 12 (Figure 21). In this condition, the tabs 23 are prevented from returning to the previous position by the shoulder corresponding to the inclined plane 17 and, consequently, the ring nut 2 cannot be brought back into the position of abutment with the first portion 4 of the body 1.

Moreover, the tabs 23 are also prevented from rotating anticlockwise, even intentionally, by the shoulder corresponding to the first recess 12 and are prevented from rotating clockwise, unintentionally, by the catch 14 (Figure 20).

Clearly, in this situation, a security system has been engaged, preventing accidental release of the ring nut 2 from the body 1.

The security situation described above is advantageously indicated by the visual pointer on the external wall of the ring nut 2 which will be disposed adjacent the reference "ON" of the second intermediate portion 5 of the body 1 (Figure 19).

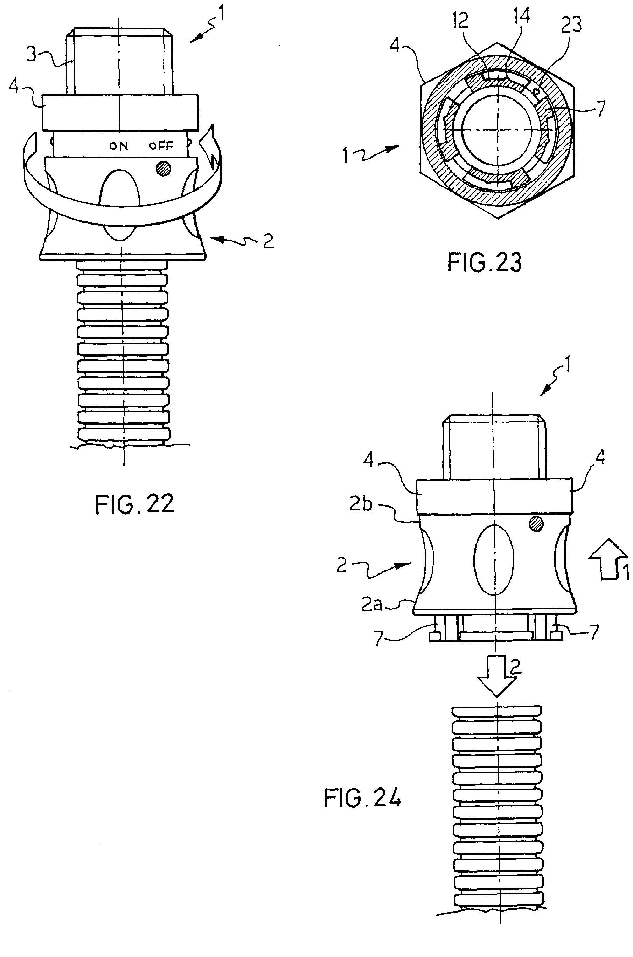

In order to disengage the security device and to release the connector 1, it will suffice to continue the clockwise rotation of the ring nut 2 until the tabs 23 pass over the catch 14, as shown in Figures 22 and 23. At this point, the tabs 23 will be disposed in the slot created between the flexible axial extensions 7 so that it will be possible to push the ring nut 2 against the first portion 4. This enables the heads of the flexible axial extensions 7 to bend radially outwardly again in response to the pulling-out of the corrugated conduit (Figure 24).

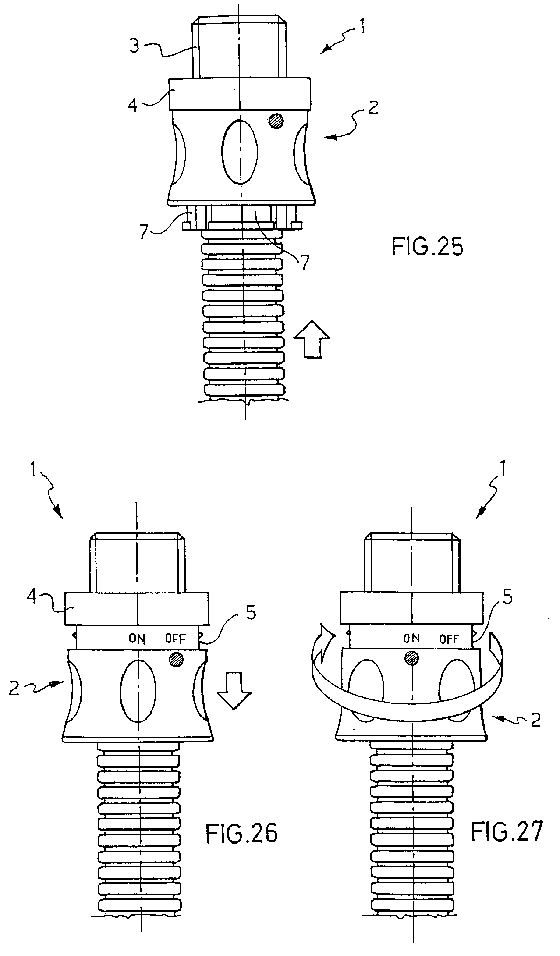

If a corrugated conduit is to be re-engaged and secured, it suffices to insert the conduit in the connector, to pull the ring nut until the ring 21 abuts the lip 10, and to rotate the ring nut 2 anticlockwise as shown by Figures 25 to 27. Naturally, during the anticlockwise rotation, it will be necessary to pass over the obstruction created by the catch 14.

These operations correspond to the reverse of the operations described above with reference to Figures 19, 22 and 24.

The connector for corrugated conduits according to the present invention may include a sleeve-like gasket 27 having a flanged end 28.

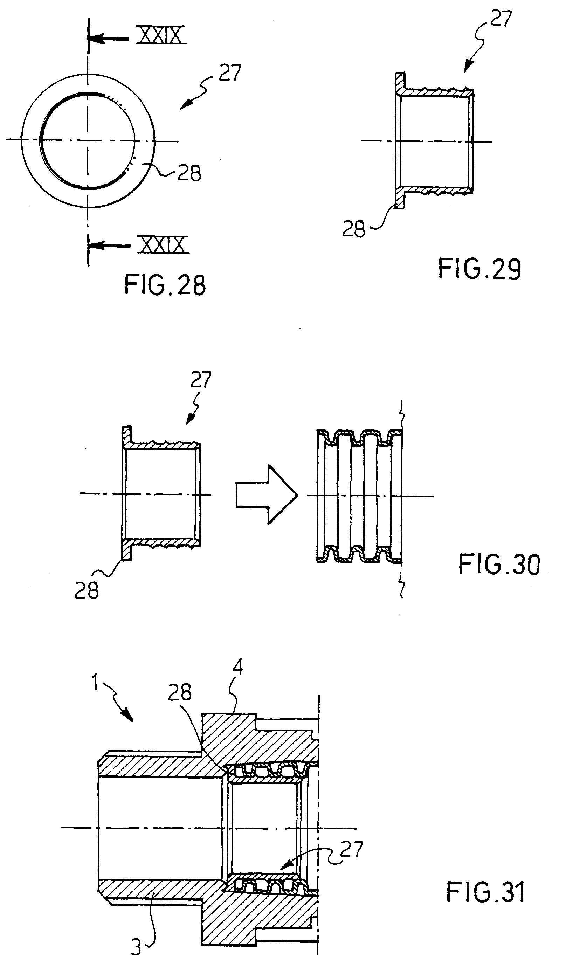

The gasket 27 is fitted flush with the end of the corrugated conduit to be inserted in the connector so that the flanged end 28 abuts the edge of the corrugated conduit (Figure 30). The corrugated conduit is then inserted in the connector and the flanged end 28 is thus compressed against the cusp 18, improving the PI of the connector (Figure 31).

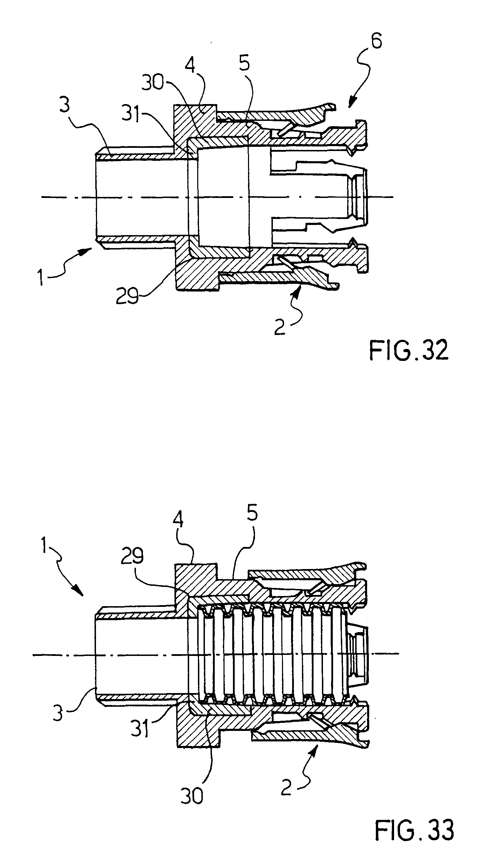

Alternatively, a gasket 29 may be formed integrally with the inside of the connector body 1 in the region of the first intermediate portion 4 and the second intermediate portion 5 (Figures 32 and 33). Moreover, this gasket 29 is advantageously formed by an annular portion 30, the internal wall of which defines a single plane continuous with the internal wall of the second end 6, and by an annular rim 31 facing inwardly relative to the gasket so as to terminate in the plane identified by the internal wall of the end 3.

The gasket 29 will preferably be formed by over-moulding or co-injection.

It is clear from the description given above that the connector for corrugated conduits is extremely easy to use since it does not require the use of two hands, the use of a single hand being sufficient. This is particularly useful if the connector has to be fitted, for example, on parts of machines which are difficult to reach.

Moreover, the connector has a security system which is easy to use but, at the same time, is effective against unintentional release.

Moreover, the connector according to the present invention advantageously has no external openings, thus preventing problems connected with infiltration of dirt and liquids which could cause malfunctioning of the connector and/or of the electrical cables housed therein.

Furthermore, the connector can be removed from the site of use with the use of tools, by means of the first intermediate portion 4 which has a hexagonal outer shape.

Moreover, the security system can also be removed with the aid of tools acting at the level of the seats 25.

It should be noted that the connector is free of any axial movement when the corrugated conduit is inserted; this results in greater strength, compactness and reliability of the PI leaktightness of the connector.

In addition, the ergonomic grip present on the outer wall of the ring nut further facilitates the operation of the connector by means of the thumb and the index finger of one hand alone.

The connector for corrugated conduits according to the present invention has been designed and produced to conform to European Norm EN 50086 which regulates the basic requirements for systems and accessories for electrical installations.

In particular, the material used to produce the connector is halogen- and cadmium-free, self-extinguishing PA 66, and the degree of leaktightness without the gasket is PI66 and with the gasket is PI67.

Many variations may be applied to the connector for corrugated conduits of the invention, for example, the positions and sizes of the various components of the connector, as well as their shapes, may be varied.

In particular, the tabs 23 may be provided on the body 1 instead of on the ring nut 2, whilst the recesses 12, 13 and 15 and the inclined planes 16 and 17 will consequently be formed on the internal wall of the ring nut 2 which, in addition, will have to have material voids corresponding to the above-described slots between the flexible axial extensions 7.

Moreover, the number of tabs 23 and shoulders 24 may vary, for example, there may be two instead of four.

The stop means 8 and 26 may alternatively be constituted by a ring which projects around the entire external circumference of the second cylindrical portion 5 and which is coupled with a corresponding recess created around the circumference of the internal wall of the ring nut 2.

The number of flexible axial extensions 7 may vary according to requirements and/or preferences.

Similarly, the method of forming the visual "ON-OFF" location mark on the second intermediate portion 5 and the corresponding pointer A on the ring nut 2 may consist of wording and corresponding coloured pointers other than those used in the embodiment shown in the drawings appended hereto.

The materials usable to construct the connector may also vary according to specific requirements or preferences.

As can be appreciated from the description, the connector for corrugated conduits according to the invention satisfies the requirements referred to in the introductory part of the present description and at the same time overcomes the disadvantages of the connectors for corrugated conduits of the prior art.

The present invention in fact provides a connector for corrugated conduits which is simple, practical and secure.

Naturally, in order to satisfy contingent and specific requirements, an expert in the art may apply to the above-described connector for corrugated conduits many modifications and variations all of which, however, are included in the scope of the invention as defined by the appended claims.

## Claims

1. A connector for corrugated conduits, comprising a body (1) which can house a corrugated conduit by being fitted thereon, and which has engagement means (7) which can be fitted in channels of the corrugated conduit and can be operated in order to restrain the corrugated conduit in the body (1), characterized in that it comprises a ring nut (2) which is movable on the body (1) and which, in a first operative condition, leaves the engagement means (7) free to be disengaged from the channels of the corrugated conduit and, in a second operative condition, keeps the engagement means (7) fitted in the channels.

2. A connector for corrugated conduits according to Claim 1, comprising security means (12, 23) for locking the ring nut (2) in the second operative condition.

3. A connector for corrugated conduits according to Claim 2, in which the security locking means (12, 23) can be snap-activated by rotation of the ring nut (2) on the body (1).

4. A connector for corrugated conduits according to Claim 3, in which the security locking means (12, 23) are releasable.

5. A connector for corrugated conduits according to Claim 3 or Claim 4, in which the security locking means comprise a first recess (12) and a respective tab (23) for snap-engagement in the recess (12).

6. A connector for corrugated conduits according to Claim 5, when it is dependent on Claim 4, comprising a catch (14) which is associated with the recess (12) and over which the tab (23) can pass when the ring nut (2) is rotated in order to release the security locking means (12, 14, 23) of the ring nut (2).

7. A connector for corrugated conduits according to Claim 6, in which the body (1) has an cylindrical internal cross-section and comprises a first end (3) and a second end (6), the second end comprising at least two flexible axial extensions (7).

8. A connector for corrugated conduits according to Claim 7, in which the first end (3) is threaded.

9. A connector for corrugated conduits according to Claim 7 or Claim 8, in which the body (2) comprises an externally hexagonal, first intermediate portion (4) between the first end (3) and the second end (6).

10. A connector for corrugated conduits according to Claim 9, in which the body (1) comprises a cylindrical, second intermediate portion (5) between the first intermediate portion (4) and the second end (6).

11. A connector for corrugated conduits according to Claim 10, comprising a gasket 29 formed by an annular portion 30 the internal wall of which defines a single plane continuous with the internal wall of the second end (6), and by an annular rim (31) facing inwardly relative to the gasket so as to terminate in the plane defined by the internal wall of the end (3).

12. A connector for corrugated conduits according to Claim 9 or Claim 10, in which a cusp (18) facing towards the second end (6) is formed on the internal wall of the body (1) in the vicinity of the connection point between the first end (3) and the first intermediate portion (4).

13. A connector for corrugated conduits according to Claim 12, comprising a gasket (27) having a flanged end for engagement with the cusp (18).

14. A connector for corrugated conduits according to any one of Claims 7 to 13, in which each of the flexible axial extensions (7) has a first recess (12) and the ring nut (2) bears internally at least two tabs (23) each of which can snap-engage in a respective first recess (12).

15. A connector for corrugated conduits according to Claim 14, in which each flexible axial extension (7) has a second recess (13), substantially aligned with the first recess (12) transversely relative to the axis of the connector and separated from the first recess (12) by the catch (14), the second recess (13) opening into an adjacent slot between the flexible axial extensions (7).

16. A connector for corrugated conduits according to Claim 15, comprising, on each flexible axial extension (7), a third recess (15) positioned between the first recess (12) and the second intermediate portion (5) substantially in alignment with the first recess (12) along the axis of the connector, the third recess (15) being separated from the first recess (12) by means of a first inclined plane (17) facing towards the third recess (15) and a second inclined plane (16) adjacent the third recess (15) and facing so as to form an edge the thickness of which is reduced towards the slot on the opposite side of the flexible axial extension (7) to the slot adjacent the second recess (13).

17. A connector for corrugated conduits according to any one of Claims 9 to 16, comprising stop means (8, 26) for restraining the ring nut (2) in abutment with the first intermediate portion (4) of the body (1).

18. A connector for corrugated conduits according to Claim 17, in which the stop means (8, 26) comprise at least two teeth (8) positioned on the external wall of the second intermediate portion (5) and respective recesses (26) in the internal wall of the ring nut (2) for housing the teeth (8).

19. A connector for corrugated conduits according to any one of Claims 7 to 18, in which the head ends of the flexible axial extensions (7) comprise engagement teeth (9) for insertion in the channels of a corrugated conduit, and an outwardly-projecting lip (10) for restraining the ring nut (2) from slipping off the body (1) .

20. A connector for corrugated conduits according to any one of Claims 7 to 19, in which the ring nut (2) has an end (2b) for fitting on the body (1) and an end (2a) which is slightly tapered to facilitate the radial bending of the flexible axial extensions (7).

21. A connector for corrugated conduits according to Claim 20, in which the second intermediate portion (5) bears an external location mark (ON-OFF) and the ring nut (2) bears, on the outside of the end (2b), a pointer (A) for cooperating with the location mark to identify the operative condition of the ring nut.

22. A connector for corrugated conduits according to any one of Claims 1 to 21, in which the ring nut (2) has external recesses (20) for facilitating gripping with the fingers of one hand.

23. A connector for corrugated conduits according to any one of Claims 1 to 22, in which the ring nut (2) has, on its end wall, at least two seats (25) for its removal from the body (1) by means of tools.

24. A connector for corrugated conduits according to any one of Claims 20 to 23, in which the portion (2a) of the ring nut (2) has, on its internal wall, at least two thickened regions (24) for ensuring better resistance to disengagement of the teeth (9) from the channels of the corrugated conduit when the ring nut is in the second operative condition.
